# EUROPEAN PATENT APPLICATION

(11) **EP 4 628 400 A1**
(43) Date of publication of application: **08.10.2025**
(21) Application number: 25165363.0
(22) Date of filing: 21.03.2025
(51) Int. Cl.: B64C 1/14

(54) **SYSTEMS AND METHODS FOR PROVIDING AN ALERT TO VIEW THROUGH A WINDOW OF AN EMERGENCY EXIT DOOR OF AN AIRCRAFT**

(30) Priority: 01.04.2024 US 202418623086
(71) Applicant: The Boeing Company, Arlington, VA 22202 (US)
(72) Inventor: MCDONALD, Steven Philip, Arlington, 22202 (US)
(74) Representative: Boult Wade Tennant LLP

(57) **Abstract**

A system (100) and a method include an emergency exit door (102) for an internal cabin (104, 230, 260, 281) of an aircraft (106). The emergency exit door (102) includes a window (110), and a lever (108) configured to be engaged to open the emergency exit door (102). One or more alert devices (111) are configured to emit one or more alerts to remind an individual to first look through the window (110) before engaging the lever (108).

## Description

### FIELD OF THE DISCLOSURE

Examples of the present disclosure generally relate to systems and methods for providing an alert to view through a window of an emergency exit door of an aircraft before attempting to open the emergency exit door.

### BACKGROUND OF THE DISCLOSURE

Vehicles such as commercial aircraft are used to transport passengers between various locations. Typical commercial aircraft include emergency exit doors having levers configured to be engaged by (such as pulled, rotated, pressed, or the like) an individual to open the emergency exit doors in the event of an evacuation.

An emergency exit door is typically located at an end of an exit row of seats within an internal cabin, and/or at ends of the passenger seating area. Before an aircraft departs an airport, passengers within the exit row are instructed by a flight attendant regarding a procedure for opening the emergency exit door in the event of an evacuation. As an example, the passengers are instructed to first look outside the window of the emergency exit door before operating a lever to open the emergency exit door. By first viewing through the window to view the conditions outside of the emergency exit door, the individual operating the emergency exit door can ensure that opening the emergency exit door will not subject the passengers within the internal cabin to potentially hazardous conditions outside of the aircraft.

However, in the heat of the moment, an individual may forget to first look through the window of the emergency exit door before operating the lever to open the emergency exit door. While the emergency exit door may include a panel listing instructions for the procedure to open the emergency exit door, the instructions may not be readily visible during an evacuation event, and/or be overlooked by an individual.

### SUMMARY OF THE DISCLOSURE

A need exists for a system and a method for alerting passengers to first look through a window of an emergency exit door before operating a lever to open the emergency exit door. With that need in mind, certain examples of the present disclosure provide a system including an emergency exit door for an internal cabin of an aircraft. The emergency exit door includes a window, and a lever configured to be engaged to open the emergency exit door. One or more alert devices are configured to emit one or more alerts to remind an individual to first look through the window before engaging the lever.

In some examples, the emergency exit door may include the one or more alert devices.

In some examples, the one or more alert devices may include a lighting system configured to emit the one or more alerts by illuminating one or more portions of the emergency exit door. The lighting system can include one or more light emitters around a perimeter of an escutcheon that surrounds the window. The lighting system can include one or more light emitters surrounding the window.

In some examples, the one or more alert devices may include one or more speakers configured to emit the one or more alerts by broadcasting an audio signal. The one or more speakers can be mounted on or within the emergency exit door.

In some examples, the one or more alert devices may include a lighting system configured to emit the one or more alerts by illuminating one or more portions of the emergency exit door, and one or more speakers configured to emit the one or more alerts by broadcasting an audio signal.

In some examples, a control unit may be in communication with the one or more alert devices. The control unit may be configured to activate the one or more alert devices in response to detection of an evacuation event.

The emergency exit door can also include an instruction panel including instructions for opening the emergency exit door.

Some other examples provide an aircraft including a system, as described herein.

Some other examples provide a method including emitting, by the one or more alert devices, the one or more alerts to remind an individual to first look through the window before engaging the lever. In some examples, said emitting may include one or both of illuminating one or more portions of the emergency exit door, or broadcasting an audio signal.

### BRIEF DESCRIPTION OF THE DRAWINGS

Figure 1 illustrates a block diagram of an exemplary system.
Figure 2 illustrates a flow chart of an exemplary method.
Figure 3 illustrates a perspective front view of an exemplary aircraft.
Figure 4A illustrates a top plan view of an exemplary internal cabin of an aircraft.
Figure 4B illustrates a top plan view of an exemplary internal cabin of an aircraft.
Figure 5 illustrates a perspective interior view of an exemplary internal cabin of an aircraft.
Figure 6 illustrates a perspective view of an exemplary emergency exit door in a closed position within an internal cabin.
Figure 7 illustrates a front view of an exemplary alert device disposed on an emergency exit door.
Figure 8 illustrates a front view of an exemplary alert device disposed on an emergency exit door.
Figure 9 illustrates a front view of an exemplary alert device disposed on an emergency exit door.
Figure 10 illustrates a front view of an exemplary alert device disposed on an emergency exit door.
Figure 11 illustrates a schematic block diagram of an exemplary control unit.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide systems and methods that generate a visual alert and/or an aural alert that serve as a reminder for passengers seated in an exit row to first look out a window of an emergency exit door to assess outside conditions prior to opening the emergency exit door. In some examples, the systems and methods include a lighting system having one or more light emitters, such as one or more light emitting diodes (LEDs), which can be positioned in a number of different arrays, lighting temperatures, and illumination levels, to create an awareness without creating a blinding effect to someone looking out the window. In some examples, the lighting system is activated when the internal cabin switches from normal lighting to emergency lighting (per design and evacuation operational procedures). Illumination can be supplemented and/or replaced with an aural alert including words or tones. The illumination source can either be contained on the door itself or shine from an adjacent location onto the door.

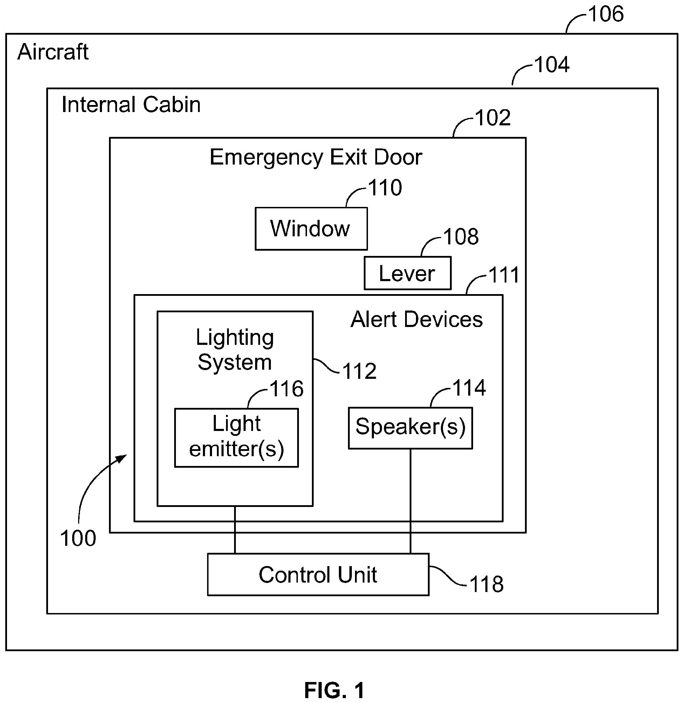

Figure 1 illustrates a block diagram of a system 100, according to an example. The system 100 includes an emergency exit door 102 within an internal cabin 104 of an aircraft 106. The emergency exit door 102 can be disposed proximate to (such as over a portion of) a wing of the aircraft 106. The emergency exit door 102 is configured to be moved between a closed position, and an open position.

The emergency exit door 102 includes a lever 108 that is configured to be engaged, such as grasped and pulled, by an individual to open the emergency exit door 102. The emergency exit door 102 also includes viewing port (such as a window 110, a screen in communication with a camera having a field of view outside, and/or the like), which allows an individual to look outside of the emergency exit door 102 in the closed position. As another example, the window 110 can be adjacent to the emergency exit door 102.

In order to provide an alert to an individual to first look through the window 110 before operating the lever 108 to open the emergency exit door 102, the system 100 includes one or more alert devices 111 configured to emit one or more alerts to remind an individual to first look through the window 110 before attempting to open the emergency exit door 102. The alert device(s) 111 include one or both of a lighting system 112 and/or one or more speakers 114. In some examples, the emergency exit door 102 includes the lighting system 112 and/or the speaker(s) 114. For example, the emergency exit door 102 includes both the lighting system 112 and the speakers(s) 114. As another example, the lighting system 112 can be remote from the emergency exit door 102, and configured to emit light onto a portion of the emergency exit door 102. In such an example, the emergency exit door 102 can include the speaker(s) 114. As another example, the speaker(s) 114 can be remote from the emergency exit door 102, and the emergency exit door 102 can include the lighting system 112. As another example, both the lighting system 112 and the speaker(s) 114 can be remote from the emergency exit door 102.

The lighting system 112 includes one or more light emitters 116 configured to emit alert lighting on a portion of the emergency exit door 102 to alert an individual to first look through the window 110 before operating the lever 108 to open the emergency exit door 102. The light emitter(s) 116 can include one or more light emitting diodes (LEDs). As another example, the light emitter(s) 116 can include one or more fluorescent lights. As another example, the light emitter(s) 116 can include one or more incandescent light bulbs. The light emitter(s) 116 can include one or more LEDs, fluorescent light(s), incandescent light bulb(s), and/or the like coupled to one or more light pipes configured to direct emitted light to one or more desired locations.

In some examples, the lighting system 112 can surround at least a portion of the window 110. For example, the light emitters 116 can provide edge and/or diffused lighting around the window 110. As another example, the light emitters 116 can be offset from the window 110, and shrouded to project illumination onto portions surrounding the window 110.

In some examples, the system 100 also includes a control unit 118 in communication with the lighting system 112 and/or the speakers(s) 114 through one or more wired or wireless connections. The control unit 118 can be remote from the emergency exit door 102. For example, the control unit 118 can be part of an overall lighting system within the internal cabin 104. As another example, the emergency exit door 102 can include the control unit 118.

During normal operation, the lighting system 112 and the speaker(s) 114 are deactivated. That is, during normal operation of the aircraft 106 (such as when parked at gate, taxing to a runway, taking off, ascending, cruising, descending, landing, and the like), neither the lighting system 112 emits a visual alert, nor the speaker(s) 114 emits an aural alert.

In response to detection of an evacuation event, however, the control unit 118 activates the lighting system 112 to emit a visual alert (such as an illumination of an area on the emergency exit door), and/or the speaker(s) 114 to emit an aural alert (such as a prerecorded verbal message) to remind an individual to first look through the window 110 before operating the lever 108 to open the emergency exit door 102. The visual alert can include a constant illumination of the area by the light emitter(s) 116. As another example, the visual alert can include an intermittent illumination, such as flickering light. As another example, the visual alert can include moving light, such as emitted by the light emitters 116 surrounding at least a portion of the window 110. The light emitted by the light emitter(s) 116 can be any desired color, intensity, and the like. The aural alert is an audio signal broadcast through the speaker(s) 114. For example, the aural alert can be a prerecorded message stating, "look out the window before pulling the lever." The aural alert can be continually repeated.

As noted, the system 100 can include either the lighting system 112 or the speaker(s) 114. In some examples, the system 100 includes both the lighting system 112 and the speaker(s) 114. In response to an evacuation event, the lighting system 112 emits the visual alert, such as alerting illumination, onto one or more portions of the emergency exit door 102. The visual alert provides a readily visible reminder to an individual to first look out the window 110 before operating the lever 108 to open the emergency exit door 102. The one or more portions include interior surfaces of the emergency exit door 102 that face the internal cabin 104 when the emergency exit door 102 is in the closed position. For example, the one or more portions include portions surrounding the window 110. In response to the evacuation event, the speaker(s) 114 broadcast an audio alert within the internal cabin 104, thereby providing a readily discernible reminder to an individual to first look out the window before operating the lever 108 to open the emergency exit door 102.

The lighting system 112 and the speaker(s) 114 are examples of alert devices 111 configured to emit an alert in response to an evacuation event. The control unit 118 is configured to activate the alert device(s) 111 in response to detection of the evacuation event. As noted, in some examples, the alert device 111 is the lighting system 112. In some other examples, the alert device 111 is the speaker(s) 114. In some other examples, the alert devices 111 include both the lighting system 112 and the speaker(s) 114.

As described herein, the system 100 includes the emergency exit door 102 for the internal cabin 104 of the aircraft 106. The emergency exit door 102 includes the window 110, and the lever 108 configured to be engaged by an individual to open the emergency exit door 102. One or more alert devices 111 are configured to emit one or more alerts to remind an individual to first look through the window 110 before engaging the lever 108. In some examples, the emergency exit door 102 includes the one or more alert devices 111. In some examples, the one or more alert devices 111 include the lighting system 112 configured to emit the one or more alerts by illuminating one or more portions of the emergency exit door 102. In some examples, the one or more alert devices 111 include one or more speakers 114 configured to emit the one or more alerts by broadcasting an audio signal. In some examples, the alert devices 111 include both the lighting system 112 and the speaker(s) 114.

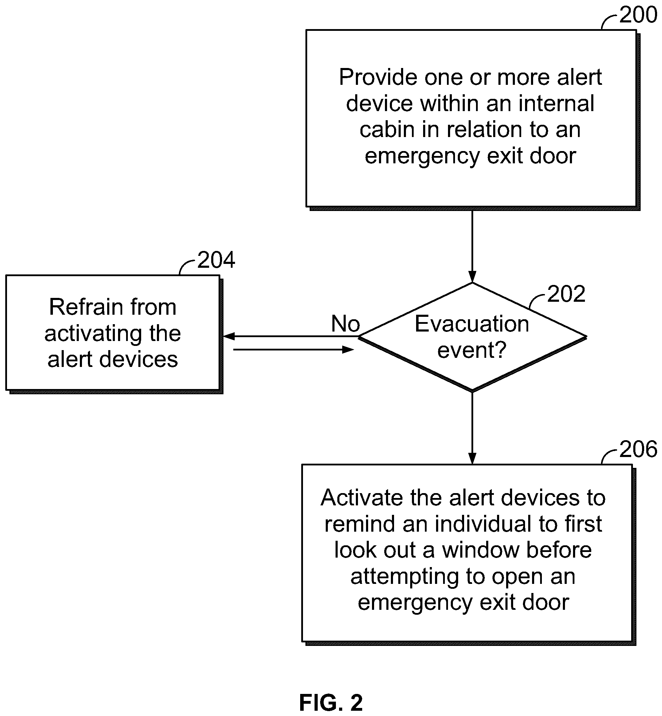

Figure 2 illustrates a flow chart of a method, according to an example. Referring to Figures 1 and 2, at 200, one or more alert devices 111 are provided within the internal cabin 104 in relation to the emergency exit door 102. In some examples, the alert device(s) 111 are provided on or within the emergency exit door 102. As another example, the alert device(s) 111 are proximate to (such as within 5 feet or less (1.5m or less)) the emergency exit door 102. The alert device(s) 111 can include one or both of the lighting system 112 and/or the speaker(s) 114.

At 202, the control unit 118 determines if there is an evacuation event, such as through automatic detection of one or more states of the aircraft 106, or through a signal input by one or more members of a flight crew. If there is not an evacuation event at 202, the method proceeds to 204, at which the control unit 118 refrains from activating the alert device(s) 111. The method then returns to 202.

If, however, there is an evacuation event at 202, the method proceeds to 206, at which the control unit 118 activates the alert device(s) 111 (such as to emit a visual alert and/or an aural alert) to remind an individual to first look out the window 110 of the emergency exit door 102 before attempting to open the emergency exit door 102.

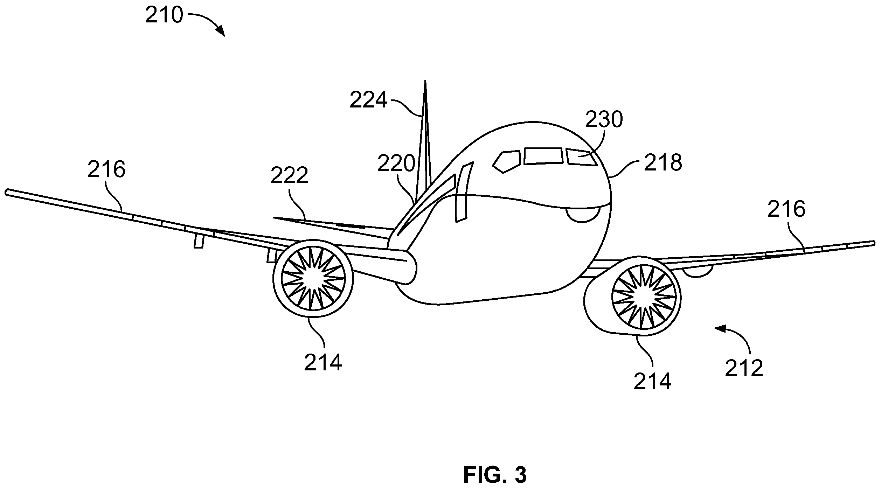

Figure 3 illustrates a perspective front view of an aircraft 210, according to an example. The aircraft 210 is an example of the aircraft 106, shown in Figure 1. The aircraft 210 includes a propulsion system 212 that includes engines 214, for example. Optionally, the propulsion system 212 may include more engines 214 than shown. The engines 214 are carried by wings 216 of the aircraft 210. In some other examples, the engines 214 may be carried by a fuselage 218 and/or an empennage 220. The empennage 220 may also support horizontal stabilizers 222 and a vertical stabilizer 224.

The fuselage 218 of the aircraft 210 defines an internal cabin 230, which includes a flight deck, one or more work sections (for example, galleys, personnel carry-on baggage areas, and the like), one or more passenger sections (for example, first class, business class, and coach sections), one or more lavatories, and/or the like. The internal cabin 230 is an example of the internal cabin 104, as shown in Figure 1.

Alternatively, instead of an aircraft, examples of the present disclosure may be used with various other vehicles, such as automobiles, buses, locomotives and train cars, watercraft, and the like. Further, examples of the present disclosure may be used with respect to fixed structures, such as commercial and residential buildings.

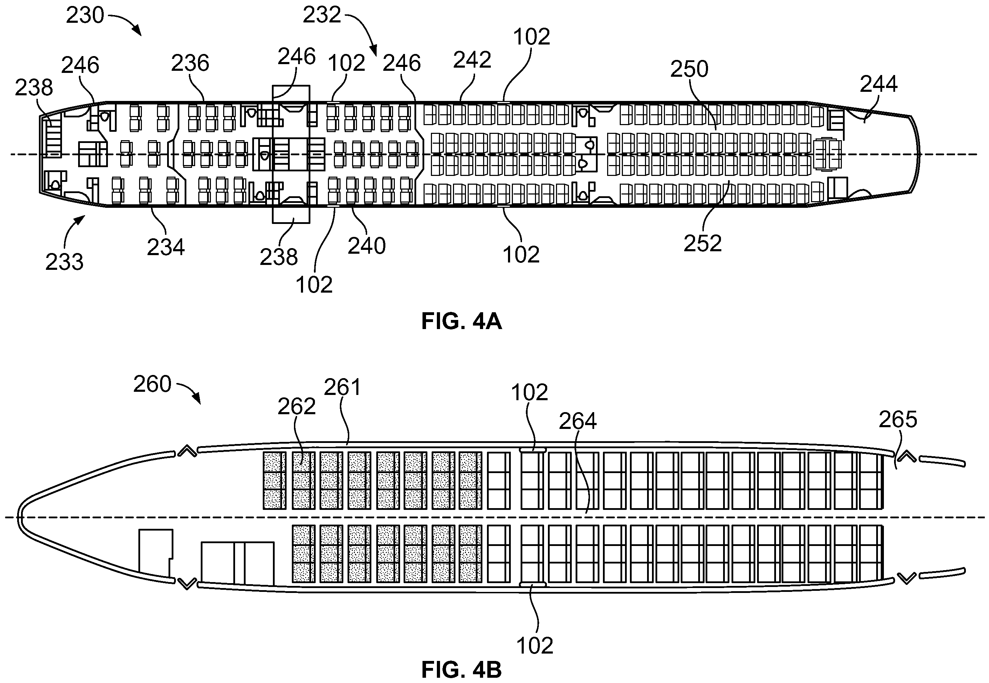

Figure 4A illustrates a top plan view of an internal cabin 230 of an aircraft, according to an example. The internal cabin 230 may be within the fuselage 232 of the aircraft, such as the fuselage 218 of Figure 3. For example, one or more fuselage walls may define the internal cabin 230. The internal cabin 230 includes multiple areas, including a front section 233, a first-class section 234, a business class section 236, one or more galley stations 238, an expanded economy or coach section 240, a standard economy of coach section 242, and an aft section 244. It is to be understood that the internal cabin 230 may include more or less areas than shown. For example, the internal cabin 230 may not include a first-class section, and may include more or less galley stations than shown. Each of the sections may be separated by a cabin transition area 246, which may include class divider assemblies between aisles.

As shown in Figure 4A, the internal cabin 230 includes two aisles 250 and 252 that lead to the aft section 244. Optionally, the internal cabin 230 may have fewer or more aisles than shown. For example, the internal cabin 230 may include a single aisle that extends through the center of the internal cabin 230 that leads to the aft section 244.

Emergency exit doors 102 are located within the internal cabin 230. The emergency exit doors 102 are configured as shown and described herein.

Figure 4B illustrates a top plan view of an internal cabin 260 of an aircraft, according to an example. The internal cabin 260 is an example of the internal cabin 230 shown in Figure 3. The internal cabin 260 may be within a fuselage 261 of the aircraft. For example, one or more fuselage walls may define the internal cabin 260. The internal cabin 260 includes multiple areas, including a main cabin 262 having passenger seats, and an aft section 265 behind the main cabin 262. It is to be understood that the internal cabin 260 may include more or less areas than shown.

The internal cabin 260 may include a single aisle 264 that leads to the aft section 265. The single aisle 264 may extend through the center of the internal cabin 260 that leads to the aft section 265. For example, the single aisle 264 may be coaxially aligned with a central longitudinal plane of the internal cabin 260. The aisle can optionally be offset from a centerline of the fuselage.

Emergency exit doors 102 are located within the internal cabin 260. The emergency exit doors 102 are configured as shown and described herein.

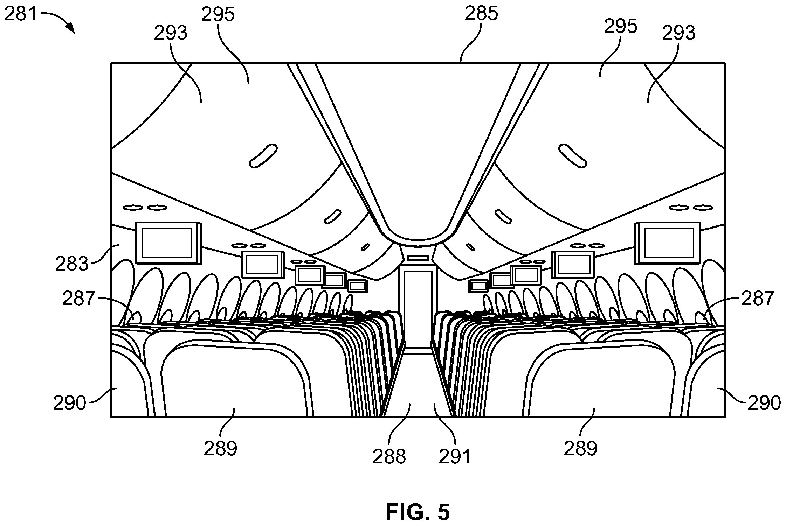

Figure 5 illustrates a perspective interior view of an internal cabin 281 of an aircraft, according to an example. The internal cabin 281 is an example of the internal cabin 104 shown in Figure 1. The internal cabin 281 includes outboard walls 283 connected to a ceiling 285. Windows 287 may be formed within the outboard walls 283. A floor 288 supports rows of seats 289. As shown in Figure 5, a row 290 may include two seats 289 on either side of an aisle 291. However, the row 290 may include more or less seats 289 than shown. Additionally, the internal cabin 281 may include more aisles than shown.

Overhead stowage bin assemblies 293 can be secured to the ceiling 285 and/or the outboard wall 283. The overhead stowage bin assemblies 293 are secured over the seats 289. The overhead stowage bin assemblies 293 extend between the front and rear end of the internal cabin 281. Each overhead stowage bin assembly 293 may include a pivot bin or bucket 295 pivotally secured to a strongback. The overhead stowage bin assemblies 293 are configured to be pivoted open in order to receive passenger carry-on baggage and personal items, for example.

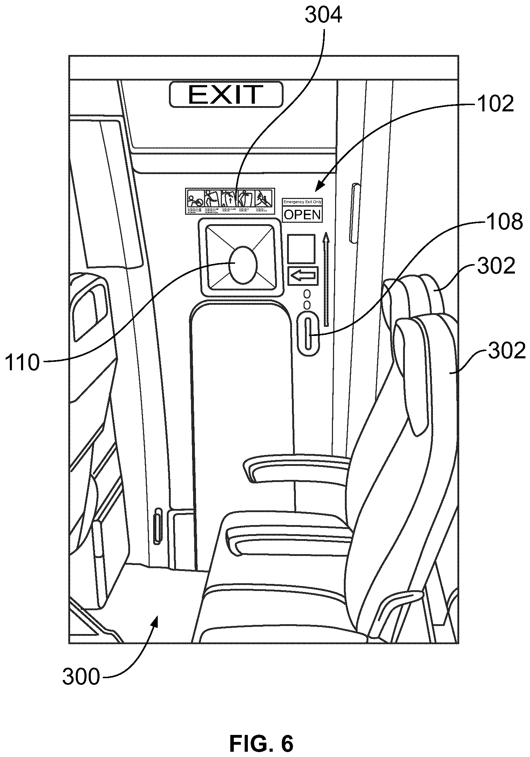

Figure 6 illustrates a perspective view of an emergency exit door 102 in a closed position within an internal cabin 104, according to an example. The emergency exit door 102 is at an end of a passenger exit row 300 including one or more passenger seats 302.

The emergency exit door 102 can also include an instruction panel 304, such as disposed over the window 110. The instruction panel 304 includes instructions for opening the emergency exit door 102 during an evacuation event.

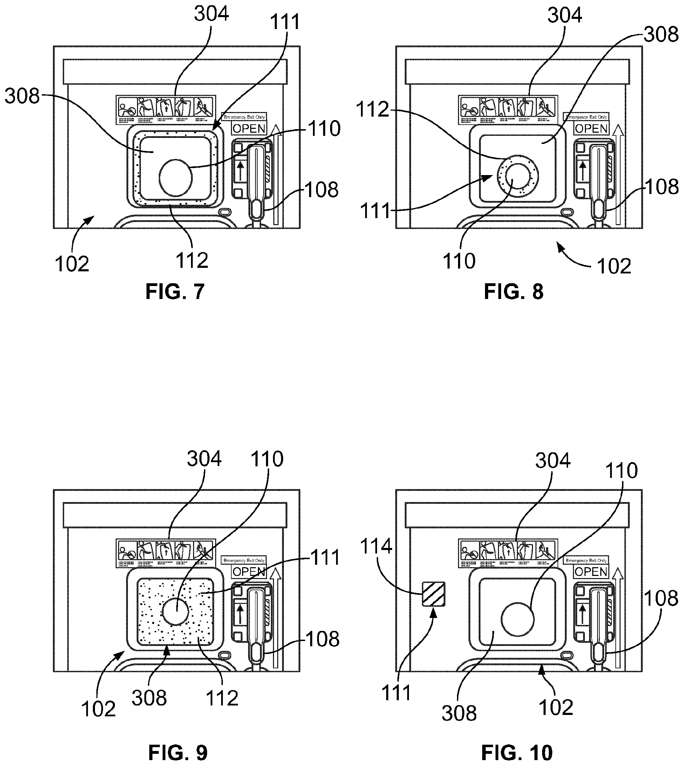

Figure 7 illustrates a front view of an alert device 111 disposed on an emergency exit door 102, according to an example. As shown, the alert device 111 is a lighting system 112 that extends around the window 110. For example, the lighting system 112 can include light emitters 116 around a perimeter of an escutcheon 308 that surrounds the window 110.

Figure 8 illustrates a front view of an alert device 111 disposed on an emergency exit door 102, according to an example. In this example, the alert device 111 is a lighting system 112 disposed on the escutcheon 308 and surrounding the window 110.

Figure 9 illustrates a front view of an alert device 111 disposed on an emergency exit door 102, according to an example. In this example, the alert device 111 is a lighting system 112 disposed on or within the escutcheon 308, and configured to illuminate an entirety of the escutcheon 308 surrounding the window 110.

Figure 10 illustrates a front view of an alert device 111 disposed on an emergency exit door 102, according to an example. In this example, the alert device 111 is a speaker 114 mounted on and/or within the emergency exit door 102.

Figures 7-10 show examples of the alert devices 111. The alert devices 111 can be sized and shaped differently than shown. As another example, the lighting system 112 can have light emitters 116 disposed proximate to the window 110 and arranged to spell LOOK. Further, the alert devices 111 can be disposed to different locations than shown. Additionally, the emergency exit door 102 can include multiple alert devices 111. As an example, an emergency exit door 102 can include two or more of the alert device 111 shown in Figures 7-10.

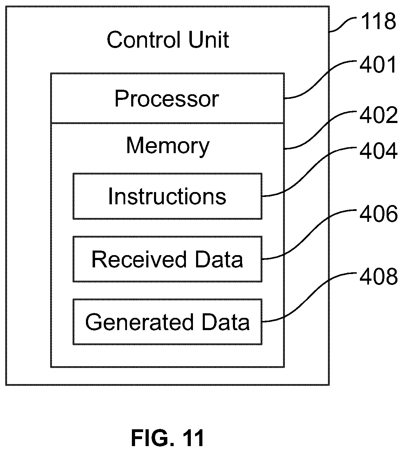

Figure 11 illustrates a schematic block diagram of the control unit 118, according to an example. In some examples, the control unit 118 includes at least one processor 401 in communication with a memory 402. The memory 402 stores instructions 404, received data 406, and generated data 408. The control unit 118 shown in Figure 11 is merely exemplary, and nonlimiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 118 may be or include one or more processors that are configured to control operation, as described herein.

The control unit 118 is configured to execute a set of instructions that are stored in one or more data storage units or elements (such as one or more memories), in order to process data. For example, the control unit 118 may include or be coupled to one or more memories. The data storage units may also store data or other information as desired or needed. The data storage units may be in the form of an information source or a physical memory element within a processing machine.

The set of instructions may include various commands that instruct the control unit 118 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 118. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 118 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include features of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

The following clauses present further examples:
Clause 1. A system comprising:
   an emergency exit door for an internal cabin of an aircraft, the emergency exit door comprising a window, and a lever configured to be engaged to open the emergency exit door; and
   one or more alert devices configured to emit one or more alerts to remind an individual to first look through the window before engaging the lever.
Clause 2. The system of Clause 1, wherein the emergency exit door includes the one or more alert devices.
Clause 3. The system of Clauses 1 or 2, wherein the one or more alert devices comprise a lighting system configured to emit the one or more alerts by illuminating one or more portions of the emergency exit door.
Clause 4. The system of Clause 3, wherein the lighting system includes one or more light emitters around a perimeter of an escutcheon that surrounds the window.
Clause 5. The system of Clauses 3 or 4, wherein the lighting system includes one or more light emitters surrounding the window.
Clause 6. The system of any of Clauses 1-5, wherein the one or more alert devices comprises one or more speakers configured to emit the one or more alerts by broadcasting an audio signal.
Clause 7. The system of Clause 6, wherein the one or more speakers are mounted on or within the emergency exit door.
Clause 8. The system of any of Clauses 1-7, wherein the one or more alert devices comprise:
   a lighting system configured to emit the one or more alerts by illuminating one or more portions of the emergency exit door; and
   one or more speakers configured to emit the one or more alerts by broadcasting an audio signal.
Clause 9. The system of any of Clauses 1-8, further comprising a control unit in communication with the one or more alert devices, wherein the control unit is configured to activate the one or more alert devices in response to detection of an evacuation event.
Clause 10. The system of any of Clauses 1-9, wherein the emergency exit door further comprises an instruction panel including instructions for opening the emergency exit door.
Clause 11. An aircraft comprising:
   an internal cabin; and
   an emergency exit door within the internal cabin, the emergency exit door comprising:
      a window;
      a lever configured to be engaged to open the emergency exit door; and
      an instruction panel including instructions for opening the emergency exit door; and
   one or more alert devices configured to emit one or more alerts to remind an individual to first look through the window before engaging the lever.
Clause 12. The aircraft of Clause 11, wherein the emergency exit door includes the one or more alert devices.
Clause 13. The aircraft of Clauses 11 or 12, wherein the one or more alert devices comprise a lighting system configured to emit the one or more alerts by illuminating one or more portions of the emergency exit door.
Clause 14. The aircraft of Clause 13, wherein the lighting system includes one or more light emitters around a perimeter of an escutcheon that surrounds the window.
Clause 15. The aircraft of Clauses 13 or 14, wherein the lighting system includes one or more light emitters surrounding the window.
Clause 16. The aircraft of any of Clauses 11-15, wherein the one or more alert devices comprises one or more speakers configured to emit the one or more alerts by broadcasting an audio signal.
Clause 17. The aircraft of Clause 16, wherein the one or more speakers are mounted on or within the emergency exit door.
Clause 18. The aircraft of any of Clauses 11-17, wherein the one or more alert devices comprise:
   a lighting system configured to emit the one or more alerts by illuminating one or more portions of the emergency exit door; and
   one or more speakers configured to emit the one or more alerts by broadcasting an audio signal.
Clause 19. The aircraft of any of Clauses 11-18, further comprising a control unit in communication with the one or more alert devices, wherein the control unit is configured to activate the one or more alert devices in response to detection of an evacuation event.
Clause 20. A method for a system comprising:
   an emergency exit door for an internal cabin of an aircraft, the emergency exit door comprising a window, and a lever configured to be engaged to open the emergency exit door; and
   one or more alert devices configured to emit one or more alerts,
   the method comprising:
      emitting, by the one or more alert devices, the one or more alerts to remind an individual to first look through the window before engaging the lever, wherein said emitting comprises one or both of illuminating one or more portions of the emergency exit door, or broadcasting an audio signal.

As described herein, examples of the present disclosure provide systems and methods for alerting passengers to first look through a window of an emergency exit door before operating a lever to open the emergency exit door.

While various spatial and directional terms, such as top, bottom, lower, mid, lateral, horizontal, vertical, front and the like can be used to describe examples, it is understood that such terms are merely used with respect to the orientations shown in the drawings. The orientations can be inverted, rotated, or otherwise changed, such that an upper portion is a lower portion, aft may be changed to forward, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from their scope. While the dimensions and types of materials described herein are intended to define the parameters of the various examples, the examples are by no means limiting. Many other examples will be apparent to those of skill in the art upon reviewing the above description. The scope of the various examples should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples, including the best mode, and also to enable any person skilled in the art to practice the various examples, including making and using any devices or systems and performing any incorporated methods. The patentable scope of the various examples of the disclosure is defined by the claims.

## Claims

1. A system (100) comprising:
an emergency exit door (102) for an internal cabin (104, 230, 260, 281) of an aircraft (106), the emergency exit door (102) comprising a lever (108) configured to be engaged to open the emergency exit door (102);
a window (110); and
one or more alert devices (111) configured to emit one or more alerts to remind an individual to first look through the window (110) before engaging the lever (108).

2. The system (100) of claim 1, wherein the emergency exit door (102) includes the one or more alert devices (111).

3. The system (100) of claim 1 or claim 2, wherein the one or more alert devices (111) comprise a lighting system (112) configured to emit the one or more alerts by illuminating one or more portions of the emergency exit door (102).

4. The system (100) of claim 3, wherein the lighting system (112) includes one or more light emitters (116) around a perimeter of an escutcheon that surrounds the window (110).

5. The system (100) of claim 3, wherein the lighting system (112) includes one or more light emitters (116) surrounding the window (110).

6. The system of claim 3, wherein the lighting system (112) includes one or more light emitters (116) offset from the window (110) and shrouded to project illumination onto portions surrounding the window (110).

7. The system (100) of any preceding claim, wherein the one or more alert devices (111) comprises one or more speakers (114) configured to emit the one or more alerts by broadcasting an audio signal.

8. The system (100) of claim 7, wherein the one or more speakers (114) are mounted on or within the emergency exit door (102).

9. The system (100) of any preceding claim, further comprising a control unit (118) in communication with the one or more alert devices (111), wherein the control unit (118) is configured to activate the one or more alert devices (111) in response to detection of an evacuation event.

10. The system (100) of claim 9, wherein the emergency exit door (102) includes the control unit (118).

11. The system (100) of any preceding claim, wherein the emergency exit door (102) further comprises an instruction panel including instructions for opening the emergency exit door (102).

12. The system (100) of any preceding claim, wherein the emergency exit door (102) includes the window (110).

13. An aircraft (106) comprising an internal cabin (104, 230, 260, 281) and the system (100) of any preceding claim.

14. A method of providing an alert in the aircraft of claim 13, wherein the aircraft comprises a control unit (118) in communication with the one or more alert devices (111), the method comprising:
determining (202), via the control unit (118), if there is an evacuation event; and
if there is an evacuation event, activating (206), via the control unit (118), the one or more alert devices (111) to remind an individual to first look out of the window before opening the emergency exit door (102).

15. The method of claim 14, wherein determining if there is an evacuation event comprises:
automatically detecting one or more states of the aircraft, or
inputting a signal by one or more members of a flight crew.
